# EUROPEAN PATENT APPLICATION

(11) **EP 4 627 898 A1**
(43) Date of publication of application: **08.10.2025**
(21) Application number: 24168723.5
(22) Date of filing: 05.04.2024
(51) Int. Cl.: A01B 63/02, A01B 63/10, A01D 34/00, A01D 34/66, A01D 75/30

(54) **GANG MOWER ASSEMBLY**

(71) Applicant: Kverneland Group Kerteminde AS, 5300 Kerteminde (DK)
(72) Inventor: Borgbjerg, Nielsen Rasmus, Odense (DK); Smedegaard, Jespersen Peter, Odense SV (DK)
(74) Representative: Murgitroyd & Company

(57) **Abstract**

A control system that uses the yaw rate and speed measured data inputs to reduce overlap while reducing or preventing leaving unmown areas between the path of mower units of a gang mower assembly.

## Description

The invention relates to a gang mower assembly. In particular to, but not limited to, a gang mower assembly which comprises a steerable wheeled driving unit, for example a tractor, having a chassis, and at least one front, and at least one rear, mower units attached to the steerable wheeled driving unit.

### Background

In the formation of a gang mower assembly, it is usually necessary to provide an amount of lateral overlap between successive, or following mower units, so that when the assembly is travelling forward in a straight line in use, this minimises the risk of creating unmown areas when the gang mower assembly carries out a steering or turning manoeuvre, whether a fixed curve or irregular turning curve. The provision of an overlap, during forward travel in a straight line, is unfortunately not an efficient use of the mowing capacity of a gang mower assembly, and manufacturers have tried for many years to reduce the amount of overlap which is required, while also trying to avoid leaving unmown areas between the mower units' pathways.

A further problem with a gang mower assembly with at least one following mower unit is the requirement to minimise the risk of any of the wheels of the driving unit running over, and therefore potentially flattening, unmown areas during steering or turning manoeuvres. This would hinder the ability to mow or collect the crop if flattened.

The present invention therefore seeks to address some of these issues. The present inventions seeks to provide a simple design solution, in connection with a gang mower assembly having following mower units, in which the lateral overlap during forward straight line travel and during steering or turning manoeuvres is reduced, while at the same time minimising the risk of creating unmown areas during steering or turning manoeuvres. Global Positioning Systems (GPS) have been increasing been used in agriculture to give positioning of machinery but this suffers from requiring a signal, often from a number of satellites to function, which is not always possible due to location and weather. Forests, hills and mountains may block the required satellite signal required, or cause unacceptable delays. Prior art systems also may rely on a predicted manoeuvre path of machinery based on general information that may result in lack of accuracy.

### Summary

In an aspect of the present invention there is provide a control system for controlling operation of movement of, one or more front mower units, or one or more rear mower units, or one or more front mower units and one or more rear mower units, of a gang mower assembly, the control system comprising:
- a first sensor for determining the yaw rate of a gang mower assembly;
- a second sensor, or means, for determining the speed of a gang mower assembly; and,
- a controller configured to receive data from the first sensor indicative of the yaw rate of a gang mower assembly, and the controller is configured to receive data from the second sensor, or means, indicative of the speed of the gang mower assembly, and in response to the received said data, the controller is configured to determine and actuate movement, of one or more front mower units, or one or more rear mower units, or one or more front mower units and one or more rear mower units, to avoid or minimise unmown areas between mowing units of a gang mower assembly when the gang mower assembly is making a manoeuvre.

In some embodiments the means for determining the speed of a gang mower assembly may be the controller of the control system and / or an electrical assembly between the controller and a speedometer of a driving unit of a gang mower assembly, wherein the controller, the electrical assembly or both the controller and the electrical assembly, are configured to detect and use the speed information from a speedometer of a driving unit of a gang mower assembly.

Additionally or alternatively, in some embodiments the means for determining the speed of a gang mower assembly is a second sensor. In some embodiments, the second sensor is able to determine the speed of a gang mower assembly and convey this data to the controller. It is foreseen that the in some embodiments the control system may use the speedometer already built into a driving unit, for example a tractor, of a gang mower assembly, to determine the speed of a gang mower assembly, that is being manoeuvred by that driving unit. The invention however is not limited to embodiments where the control system requires communication with the speedometer of a driving unit of a gang mower assembly. In some embodiments, the control system comprises a second sensor configured to detect the speed of a gang mower assembly. In some embodiments, the second sensor is configured to detect the speed of a gang mower assembly and to convey this data to the controller of the control system.

In some embodiments, the controller is configured to receive data indicative of the speed of the gang mower assembly. In some embodiments, the controller is configured to receive data indicative of the speed of the gang mower assembly from a second sensor configured to detect the speed of a gang mower assembly. In some embodiments, the controller is configured to receive data indicative of the speed of the gang mower assembly from a means configured to detect the speed of a gang mower assembly. In some embodiments, the means to detect the speed of a gang mower assembly may comprise an electrical assembly in communication with a speedometer of a driving unit of a gang mower assembly and the controller of the control system.

Advantageously the present invention may provide an improved, or more efficient mowing device and method. Advantageously the present invention may minimise overlap of mower units of a gang assembly to avoid inefficiencies and flattening crop before mowing, while avoiding leaving or at least reducing leaving unmown crop between the mower units' pathways, especially when making a turning manoeuvre, even when making a tight turning manoeuvre.

In another aspect of the present invention there is provided a gang mower assembly comprising a control system as claimed herein.

In another aspect of the present invention there is provided a gang mower assembly comprising:
- a steerable wheeled driving unit; and,
- front and rear mower units spaced apart lengthwise of the driving unit, and laterally space apart so as to present a combined mowing face preventing or minimising unmown areas between the mower units and with an overlap setting which is zero or of minimal extent for during straight line forward mowing; in which, a front mower unit is mounted on a forward part of the driving unit, and the, at least one, rear mowing unit is connected to a rear part of the driving unit;

- a first sensor which is operative, during a steering manoeuvre, and configured to monitor the yaw rate of the gang mower assembly;
- a second sensor, or means, configured to monitor the speed of the gang mower assembly; and,
- a controller, wherein the controller is configured to receive the yaw rate of the gang mower assembly from the first sensor and the speed from said second sensor, or means, and the controller is configured to determine and control, in response to the yaw rate and speed of the gang mower assembly, the lateral adjustment of one or more front mower units, or one or more rear mower units, or one or more front mower units and one or more rear mower units, so that the lateral spaced apart distance of the front and rear mower units maintain the overlap setting of zero or of a minimal extent during a manoeuvre while preventing or minimising unmown areas between the mower units.

In another aspect of the present invention there is provided is provided a method for avoiding or reducing unmown areas of a crop between front and rear mower units of a gang mower comprising the steps of:
- using a control system or gang mower assembly as described herein.

In another aspect of the present invention there is provided a method for avoiding or reducing unmown areas of a crop between front and rear mower units of a gang mower comprising the steps of:
using a first sensor configured for determining the yaw rate of a gang mower assembly;
   - using a second sensor, or means, configured for determining the speed of a gang mower assembly; and,
   - using a controller, wherein the controller is configured to receive data from the first sensor indicative of yaw rate of a gang mower assembly, and configured to receive data from the second sensor, or means, indicative of the speed of the gang mower assembly, and in response to the said received data, determine and actuate movement of one or more front mower units, or one or more rear mower units, or one or more front mower units and one or more rear mower units, to avoid or minimise
unmown areas between front and rear mowing units of a gang mower assembly when the gang mower assembly is making a manoeuvre.

Advantageously the method may provide a more efficient mowing method over the prior art, avoiding or reducing the amount or risk of leaving unmown crop between the front and rear mower unit pathways.

In some embodiments, the controller determines, using the yaw rate and speed of a gang mower assembly, a path of a manoeuvre of a gang mower assembly to determine the responsive movement of one or more front mower units, or one or more rear mower units, or one or more front mower units and one or more rear mower units, of a gang mower assembly, to avoid or minimise unmown areas between the rear mowing units of a gang mower assembly when making a manoeuvre.

In some embodiments, the first sensor is an Inertia Measurement Unit (IMU) sensor. Inertia Measurement Unit sensors are able to measure the yaw rate. In some embodiments, a first sensor, for example an Inertia Measurement Unit, may be configured to detect yaw rate, of a gang mower assembly that the first sensor is positioned on or attached to. In some embodiments, wherein the first sensor is able to detect the yaw rate of a gang mower assembly, the first sensor is further configured to convey the yaw rate data to the controller of the control system.

In some embodiments, the first sensor comprises an Inertia Measurement Unit (IMU) sensor.

In some embodiments, the first sensor comprises a Micro-electromechanical Systems (MEMS) sensor.

In some embodiments, the first sensor comprises an Inertia Measurement Unit sensor (IMU) or a Micro-electromechanical Systems sensor (MEMS) or an accelerometer, or a gyroscope, or any combination of an Inertia Measurement Unit sensor, a Micro-electromechanical Systems (MEMS) sensor, accelerometer, or gyroscope.

In some embodiments, the second sensor comprises a speedometer or GPS or accelerometer, or radar or transmission sensor, or any combination thereof a speedometer, GPS, accelerometer, radar or transmission sensor.

In some embodiments, the first sensor of the control system is positioned along the driving direction longitudinal axis a gang mower assembly. When in use in some embodiments wherein the first sensor able to detect the yaw rate of a gang mower assembly, the first sensor is positioned, when in operable use, along the driving direction longitudinal axis.

In some embodiments, the controller actuates movement of one or more front mower units, or one or more rear mower units, or one or more front mower units and one or more rear mower units, of a gang mower assembly. In some embodiments, the controller actuates lateral movement of one or more front mower units, or one or more rear mower units, or one or more front mower units and one or more rear mower units, of a gang mower assembly.

In some embodiments the actuated movement, or adjustment or responsive movement or responsive adjustment comprises lateral movement or adjustment.

In some embodiments, the controller instantaneously actuates lateral movement of one or more front mower units, or one or more rear mower units, or one or more front mower units and one or more rear mower units, of a gang mower assembly. This may enable the controller to continuously react to changes in direction of the gang mower assembly, to assist in avoiding leaving unmown areas between the front and rear mower units, even when the gang mower assembly is making numerous tight turns and/ or following a convoluted path. By the term "instantaneously" as used herein the skilled person will understand that this term is used pragmatically here and that the term includes the meaning of very quickly, or very fast after a trigger event, for example, and that the term is not necessarily limited to mean, "at the same time" or "immediately", to a, for example, another event.

In some embodiments, the controller is configured to activate hydraulic systems to actuate a movement of one or more front mower units, or one or more rear mower units, or one or more front mower units and one or more rear mower units. In some embodiments, the controller is configured to activate hydraulic systems to actuate a lateral movement of one or more front mower units, or one or more rear mower units, or one or more front mower units and one or more rear mower units. This may enable the controller to actuate the smooth and quick for example lateral, movement of any of the one or more front or rear mower units.

In some embodiments, the controller is configured to activate hydraulic side shift valves of hydraulic side shift cylinders for lateral movement of a mower unit to actuate the lateral movement of one or more front mower units, or one or more rear mower units, or one or more front mower units and one or more rear mower units of a gang mower assembly. This may enable the controller to actuate the smooth and quick lateral movement of any of the one or more front or rear mower units, or one or more front and rear mower units.

Therefore, a gang mower assembly according to the present invention may be able to determine and adjust, and maybe make fine tune adjustments, of the lateral position of one or more front or rear mower units, or one or more front mower units and one or more rear mower units, during a manoeuvre, and to make these adjustments quickly. So as to compensate for the steering movement of one or more other mower units and / or the gang mower assembly, and effectively maintain substantially constant overlap setting, and / or avoiding or at least minimising leaving unmown areas between the front and rear mower units. Depending on the detected speed of a gang mower assembly that the control system is attached to may determine the quickness of the responsive action or movement of one or more of the front mower units, or one or more rear mower units, or one or more front mower units and one or more of the rear mower units, if a responsive movement is required, to avoid or minimise leaving unmown areas between the mower units of a gang mower assembly.

In some embodiments, the controller determines when the responsive movement is actuated, if any movement is required of any mower unit. The controller may determine when a responsive movement is required based on the speed of the gang mower assembly. "movement" here is movement of any one or more of the mower units of a gang mower assembly.

In some embodiments, the controller determines the length and direction of any responsive movement required. If any movement is determined to be required. The controller may determine the length and direction of any required responsive movement of any one or more of the mower units of a gang mower assembly based on the yaw rate and speed of the gang mower assembly.

In particular embodiments, adjustment can take place during a transition stage between straight line driving and driving along a constant curved steering path, in which case the lateral adjustment of the rear unit starts from zero and works up to a maximum and then moves progressively back to zero. For example when changing from a straight line direction of travel, then turning around before straightening up again. As crop is usually mown in fairly straight travel action for the majority of a crop harvest with turning at the ends of a straight run, the present invention potentially may make efficient crop mowing or harvesting especially in situations where turning is required.

In some preferred embodiments, the responsive movement of the mower units of a gang mower assembly will be in a lateral direction, for example left or right, lateral to the driving direction longitudinal axis. In particular embodiments, the movement may also consist of movement in other directions. For example in particular embodiments, the movement of the mower units may be vertically up and or down. In some particular embodiments, additionally or alternatively, the movement of the mower units may be forward or backwards in relation to the driving direction or driving direction longitudinal axis of the gang mower assembly. In particular embodiments the movement of a mower unit of a gang mower assembly may be a swinging or pendulum type, or pivoting type, of movement that consists of movement in more than one plane. For example, a mower unit, of a gang mower assembly, in some embodiments may move along two planes. In some embodiments, the movement of a mower unit may move along three planes. In some embodiments, the controller determines and actuates what planes of movement a mower unit of a gang mower assembly will make. In some particular embodiments a mower unit of a mower gang assemble may move, relative to the driving direction longitudinal axis, laterally or vertically or back and forth, or any combination of laterally, vertically and back and forth. In some embodiments, the controller can determine and actuate the required responsive movement of any mower unit of a gang mower assembly to move, relative to the driving direction longitudinal axis, laterally or vertically or back and forth, or any combination of laterally, vertically and back and forth.

In some embodiments, in a case of variable steering i.e. movement along an irregular curved path, a rear mower unit may be adjusted, for example laterally, to compensate automatically for the varying lateral steering position of a front mower unit, with respect to the longitudinal axis of the driving unit. In alternative embodiments in a case of variable steering, i.e. movement along an irregular curved path, a front mower unit may be adjusted, for example laterally, to compensate automatically for the varying lateral steering position of a rear mower unit, with respect to the longitudinal axis of the driving unit. In some embodiments, in a case of variable steering i.e. movement along an irregular curved path, one or more front mower units, or one or more rear mower units or one or more front mower units and one or more rear mower units may be adjusted, for example laterally, to compensate automatically for the varying lateral steering position of a gang mower assembly.

In some embodiments, the driving unit has a chassis, and front and rear wheel sets supporting the chassis, in which the chassis has one or more front parts on which a front mower unit is mounted, and rear part to which a rear mower unit is connected, and in which there is a pivot steering mechanism which interconnects the front and rear chassis parts.

In some embodiments, the driving unit may be a tractor, or an autonomous vehicle or a robot. In some embodiments, the mower units may be self- propelled configured to be able to work with other mower units to form a gang mower assembly.

In some embodiments, the control means is operative to adjust the position of one or more rear mower units laterally relative to the chassis or driving direction longitudinal axis.

In some embodiments, the control means is operative to adjust the position of one or more front mower units laterally relative to the chassis or driving direction longitudinal axis of the gang mower assembly.

In some embodiments alternatively or additionally the controller is configured to be operative to adjust the position of one or more rear mower units in an opposite direction to the direction of lateral movement of one or more front mower units during a steering manoeuvre.

In some embodiments alternatively or additionally the controller is configured to be operative to adjust the position of one or more front mower units in an opposite direction to the direction of lateral movement of one or more rear mower units during a steering manoeuvre.

In some embodiments alternatively or additionally the controller is configured to be operative to adjust the position of one or more rear mower units in a similar direction to the direction of lateral movement of one or more front mower units during a steering manoeuvre.

In some embodiments alternatively or additionally the controller is configured to be operative to adjust the position of one or more front mower units in a similar direction to the direction of lateral movement of one or more rear mower units during a steering manoeuvre.

In some embodiments, the driving unit has a chassis, and steerable front and rear wheel sets supporting the chassis. In some embodiments, the front wheel set may be used to carry out a steering manoeuvre, and therefore the monitoring means may monitor instantaneously (a) the distance travelled and (b) the steering angle of the front wheels, and then deliver an integrated compensating signal, to which the control means responds and effects suitable rear wheels, in order to carry out required lateral adjustment of the rear mower unit, or units.

In some embodiments, the driving unit may comprises a tractor. In some embodiments, the driving unit may comprise a tractor having steerable front wheels.

In some embodiments, a rear mower unit or units may be mounted on a trailed vehicle. In some embodiments, a compensatory feedback signal may be applied to adjust the position of one or more front mower units, or one or more rear mower units, or one or more front mower units and one or more rear mower units, laterally, either by a steering adjustment of the trailed vehicle, or by lateral adjustment of the mower unit relative to the frame of the trailed vehicle.

In some embodiments wherein a trailed vehicle is used wherein the trailed vehicle has one or more mower units mounted to the said trailed vehicle, the first sensor may be mounted on the said trailed vehicle. That is, in some embodiments, the first sensor of the control system may be mounted on a trailed vehicle of a gang mower assembly. In some embodiments, the first sensor of the control system may be mounted on a trailed vehicle of a gang mower assembly, wherein the said first sensor is mounted along the longitudinal axis of the trailed vehicle relative to the driving direction.

In some particular embodiments, a pair of rear wing mower units may be provided, each rear mower unit located outwardly to a corresponding lateral side of the front mower, and with zero or minimal lateral overlap between the inboard end of each wing mower and the corresponding outer end of the front mower unit.

In some embodiments, in some circumstances of operation, it is possible that the driver or user may attempt to take too sharp a turn in a steering manoeuvre, which cannot be sufficiently compensated for by lateral adjustment of one or more of the front mower units, or one or more of the rear mower units, or one or more front mower units and one or more of the rear mower units, in which case an alarm signal may be triggered to give notice of this to the driver who can then apply a less sharp turn of the steering mechanism.

In some embodiments, the gang mower assembly comprises an alarm. In some embodiments, the gang assembly mower comprises an alarm in communication with a controller, which together are configured to produce an alarm signal when in use and a turn manoeuvre is excessively sharp that lateral movement of any, or all, of the mowing units would not compensate adequately to prevent unmown areas, or excessive overlapping. In some embodiments, the alarm is a visual alarm. In some embodiments, the alarm is an audible alarm.

In some embodiments, excess overlapping may comprise a lateral length of 10 centimetres or greater of overlapping.

In some embodiments, a non-minimal unmown area may comprise a lateral length of 10 centimetres or greater, and of any longitudinal length.

In some embodiments of the invention, it may be desirable to provide an adjustable mounting of one or more front mower units, so that one or more front mower units may be laterally displaced. This makes for easy lateral displacement of movement. For example in some embodiments, one or more front mower units may be laterally displaced during a steering manoeuvre.

In some embodiments, one or more front mower units of a gang mower may be moved in a right hand side direction from the chassis or driving direction longitudinal axis.

In some embodiments, one or more front mower units of a gang mower may be moved in a left hand side direction from the chassis or driving direction longitudinal axis.

In some embodiments, one or more rear mower units of a gang mower may be moved in a right hand side direction from the chassis or driving direction longitudinal axis.

In some embodiments, one or more rear mower units of a gang mower may be moved in a left hand side direction from the chassis or driving direction longitudinal axis.

Advantageously the one or more front and rear mower units can move both right and left as lateral movements to offer the correct compensation movement as required depending on the manoeuvre or turn or direction of a gang mower assembly.

In some embodiments, one or more front mower units may be laterally moved to the right side in respect to the direct of travel, during a right direction steering movement of the gang mower assembly. In some embodiments, one or more front mower units may be laterally moved to the left side in respect to the direction of travel, during a left direction steering movement of the gang mower assembly. Advantageously a mower unit can be laterally offset and can mow a standing crop which otherwise would be run over by the wheels of one of the units, or left unmown.

In alternative embodiments, one or more front mower units may be laterally moved to the right side in respect to the direct of travel, during a left direction steering movement of the gang mower assembly. In some embodiments, one or more front mower units may be laterally moved to the left side in respect to the direction of travel, during a right direction steering movement of the gang mower assembly.

In some embodiments, one or more rear mower units may be laterally moved to the right side in respect to the direct of travel, during a right direction steering movement of the gang mower assembly. In some embodiments, one or more rear mower units may be laterally moved to the left side in respect to the direction of travel, during a left direction steering movement of the gang mower assembly.

In alternative embodiments, one or more rear mower units may be laterally moved to the right side in respect to the direct of travel, during a left direction steering movement of the gang mower assembly. In some embodiments, one or more rear mower units may be laterally moved to the left side in respect to the direction of travel, during a right direction steering movement of the gang mower assembly.

In some embodiments of the invention, it may be desirable to provide an adjustable mounting of one or more rear mower units, so that the one or more rear mower units may be laterally displaced. For example in some embodiments, one or more of the rear mower units may be laterally displaced during a steering manoeuvre. In some embodiments, one or more of the rear mower units may be laterally displaced to the right or left or both to the right and left at different times. For example, in some embodiments, the one or more rear mower units may be laterally moved to the right side in respect to the direct of travel, during a right direction steering movement of the gang mower assembly. In some embodiments, a front mower unit may be laterally moved to the left side in respect to the direction of travel, during a left direction steering movement of the gang mower assembly. For example, in some embodiments, the one or more rear mower units may be laterally moved to the left side in respect to the direct of travel, during a right direction steering movement of the gang mower assembly. In some embodiments, one or more front mower units may be laterally moved to the right side in respect to the direction of travel, during a left direction steering movement of the gang mower assembly. Advantageously a mower unit can be laterally offset and can mow a standing crop which otherwise would be run over by the wheels of one of the units, or left unmown.

In some embodiments, the gang mower assembly comprises a controller. In some embodiments, the gang mower assembly comprises a sensor. In some embodiments, the gang mower assembly comprises a plurality of sensors.

In some embodiments the control system comprises a third sensor wherein the said third sensor is configured to detect the location and orientation and width of mower units of a gang mower assembly when operable with a gang mower assembly and the said third sensor is configured to convey detected information to the controller.

In some embodiments there are more than one third sensor.

In some embodiments the third sensor is configured to detect the distance between the mower units. This may be between the two or more rear mower units, or between a front mower unit and one or more rear mower units, or between a front mower unit and one or more rear mower units.

In some embodiments the third sensor is configured to detect the distance between one or more mower units and the chassis.

In some embodiments the third sensor is configured to detect the distance between one or more mower units and the first sensor unit.

In some embodiments, the control system comprises a detection sensor that is configured to detect the location and orientation and width of one or more mower units of a gang mower assembly when operable with a gang mower assembly and the said detection sensor is configured to convey these values to the controller.

In some embodiments, the gang mower assembly comprises an Inertial Measurement Unit or IMU sensor. Advantageously the IMU sensor can measure relative location, acceleration, angular rates, yaw rate and direction. Advantageously the Inertia Measurement Unit (IMU) sensor can measure tilt in respect to the Earth.

In some embodiments, the Inertia Measurement (IMU) sensor measures the yaw rate, in respect to the Earth. In some embodiments, the (IMU) sensor measures yaw of a gang mower assembly that it is placed within, in respect to the Earth.

In some embodiments, a controller or a gang mower assembly comprising a controller is, configured to move one or more mowing units laterally, either left or right, or any combination of left and right, to avoid or minimise leaving unmown crop between mowing units or flattening of crop by wheel sets of a mowing unit.

In some embodiments, a controller is configured to move one or more mowing units laterally, either left or right, or any combination of left and right, to avoid or minimise leaving unmown crop or an area, between mowing units, or flattening of crop by wheel sets of a mowing unit, wherein the controller is configured to determine and actuate the responsive lateral movement of one or more mower units, in response to measuring the yaw rate and speed, optionally with inputted measurements, of a gang mower assembly.

In some embodiments, the controller is configured to move one or more mowing units laterally, either left or right, or any combination of left and right, to avoid or minimise leaving, unmown areas between mowing units or flattening of crop by wheel sets of a mowing unit, wherein the controller is configured to determine and actuate the responsive lateral movement of one or more mower units, in response to measuring the yaw rate and speed of a gang mower assembly, measured during a steering manoeuvre, together with inputted measurements of the gang mower assembly.

In some embodiments, the controller comprises inputting means to manually input data. The inputted data may assist the controller or improve calculations regarding, the orientation of parts of a gang mower assembly or more accurate responsive movement of one or more of mower units, of a gang mower assembly during a manoeuvre.

In some embodiments, the controller is configured to move one or more mowing units laterally, either left or right, or any combination of left and right, to avoid or minimise leaving, unmown areas between mowing units or flattening of crop by wheel sets of a mowing unit, by being configured to determine and actuate the responsive lateral movement in response to measuring the yaw rate and speed, measured during a steering manoeuvre, together with inputted measurements of the gang mower assembly.

In some embodiments, the controller is configured to determine and actuate the responsive movement of one or more front mower units, or one or more rear mower units, or one or more front mower units and one or more rear mower units, of a gang mower assembly, in response to the yaw rate and speed of a gang mower assembly and optionally in response to one or more additional data values or information selected from the list including:
- the working or cutting width of one or more front mower units of a gang mower assembly;
- the working or cutting width of one or more rear mower units of a gang mower assembly;
- the lateral distance of one or more front mower units from the driving direction longitudinal axis of a gang mower assembly;
- the lateral distance of one or more rear mower units from the driving direction longitudinal axis of a gang mower assembly;
- the lateral distance of the one or both lateral edges of one or more front mower units of a gang mower assembly from the driving direction longitudinal axis of a gang mower assembly;
- the lateral distance of the one or both lateral edges of one or more rear mower units of a gang mower assembly from the driving direction longitudinal axis of a gang mower assembly;
- the distance along the driving direction longitudinal axis from one or more front mower units to one or more rear mower units;
- the distance along the driving direction longitudinal axis from one or more front mower units to a rear axle of a gang mower assembly;
- the distance along the driving direction longitudinal axis from one or more rear mower units to a rear axle of a gang mower assembly;
- the wheel location of a mower unit relative to the mower unit.

In some embodiments, the controller is configured to actuate the responsive movement of one or more mowing units laterally, either left or right, or any combination of left and right, to avoid or minimise leaving, unmown areas between mowing units or flattening of crop by wheel sets of a mowing unit, wherein the controller is configured to determine and actuate the responsive lateral movement in response to the measured yaw rate and speed of a gang mower assembly, measured during a steering manoeuvre, together with, one or more inputted measurements of the gang mower assembly selected from the group:
- the working or cutting width of one or more front mower units of a gang mower assembly;
- the working or cutting width of one or more rear mower units of a gang mower assembly;
- the lateral distance of one or more front mower units from the driving direction longitudinal axis of a gang mower assembly;
- the lateral distance of one or more rear mower units from the driving direction longitudinal axis of a gang mower assembly;
- the lateral distance of the one or both lateral edges of one or more front mower units of a gang mower assembly from the driving direction longitudinal axis of a gang mower assembly;
- the lateral distance of the one or both lateral edges of one or more rear mower units of a gang mower assembly from the driving direction longitudinal axis of a gang mower assembly;
- the distance along the driving direction longitudinal axis from one or more front mower units to one or more rear mower units;
- the distance along the driving direction longitudinal axis from one or more front mower units to a rear axle of a gang mower assembly;
- the distance along the driving direction longitudinal axis from one or more rear mower units to a rear axle of a gang mower assembly;
- the wheel location of a mower unit relative to the mower unit.

In some embodiments, the controller is configured to enable a user to manually input one or more measurements of the gang mower assembly selected from the group:
- the working or cutting width of one or more front mower units of a gang mower assembly;
- the working or cutting width of one or more rear mower units of a gang mower assembly;
- the lateral distance of one or more front mower units from the driving direction longitudinal axis of a gang mower assembly;
- the lateral distance of one or more rear mower units from the driving direction longitudinal axis of a gang mower assembly;
- the lateral distance of the one or both lateral edges of one or more front mower units of a gang mower assembly from the driving direction longitudinal axis of a gang mower assembly;
- the lateral distance of the one or both lateral edges of one or more rear mower units of a gang mower assembly from the driving direction longitudinal axis of a gang mower assembly;
- the distance along the driving direction longitudinal axis from one or more front mower units to one or more rear mower units;
- the distance along the driving direction longitudinal axis from one or more front mower units to a rear axle of a gang mower assembly;
- the distance along the driving direction longitudinal axis from one or more rear mower units to a rear axle of a gang mower assembly;
- the wheel location of a mower unit relative to the mower unit.

The above and below additional parameters, that may for example be inputted in to the controller, may be used to improve accuracy of the adjustment or movement of one or more mower units to avoid or minimise unmown areas between mower units of a gang mower assembly during a manoeuvre.

In some embodiments, the controller is configured to enable a user to manually input data.

In some embodiments, the controller is configured to enable a user to manually input the working width of, one or more front mower units, or one or more rear mower units, or one or more front mower units and one or more rear mower units.

In some embodiments, the controller is configured to enable a user to input how many front mower units, or rear mower units, or how many front and rear mower units there are in a gang mower assembly to be used.

In some embodiments, the controller is configured to enable a user to manually input the distance from one or more front mower units of a gang mower assembly to one or more rear mower units of a gang mower assembly along the driving direction longitudinal axis.

In some embodiments, the control system comprises a detection sensor configured to measure the mowing width of one or more front mower units, or one or more rear mower unit, or one or more front mower units and one or more rear mower units, of a mowing gang assembly and configured to communicate these values to the controller.

In some embodiments, the controller is configured to use inputted information to know the spacing and orientation of any mower units of a gang mower assembly to assist in calculations, or determination, of a responsive movement for any mower unit in response to a manoeuvre of a gang mower assembly. This may allowed improved accuracy of a responsive movement of one or more mower units to be achieved.

In some embodiments, the controller comprises drop-down menus or a choice of values for selection by a user. For example, in some embodiments, a user may manually select KvG for the front mower units, and therefore the controller will know, for example, pre-set widths and spacings or lateral distance from the driving direction longitudinal axis, or distance between front and rear mower units, for selected choices.

In some embodiments, the controller is configured to enable a user to manually input the distance from the driving direction longitudinal axis, or chassis, to, one or more front mower units, or one or more rear mower units, or one or more front mower units and one or more rear mower units.

In some embodiments, the control system comprises a detection sensor configured to measure the lateral distance from the driving direction longitudinal axis, or chassis, to, one or more front mower units, or one or more rear mower unit, or one or more front mower units and one or more rear mower units, of a gang mower assembly, and the said detector sensor is configured to communicate these said lateral distance measurements to the controller.

In some embodiments, the control system comprises a detection sensor configured to measure the distance from one or more front mower units of a gang mower assembly, to one or more rear mower units of a gang mower assembly, along the driving direction longitudinal axis, and the detection sensor is configured to communicate these said distance values to the controller.

In some embodiments, the working width of one or more front mower units, or one or more rear mower units, or one or more front mower units and one or more rear mower units, is inputted to the controller.

In some embodiments, the lateral distance from the driving direction longitudinal axis to, one or more front mower units, or one or more rear mower units, or one or more front mower units and one or more rear mower units, is inputted to the controller.

In some embodiments, the distance between one or more front mower units of a gang mower assembly and one or more rear mower units of a gang mower assembly along the driving direction longitudinal axis is inputted into the controller.

In some embodiments the controller comprises pre-programmed information of the working width of one or more front mower units, or one or more rear mower units, or both one or more front mower units and one or more rear mower units of a gang mower assembly by automatic recognition when the controller is in electrical communication with a gang mower assembly.

For example, in some embodiments a user selects the type of gang mower assembly used, for example pre-set KvG, or enters specific values manually, for example the width of the front mower unit, the lateral distance of the mower units used, the longitudinal distance between any front and rear mower units, or any combination of these or additional values.

In some embodiments, the maximum and minimum lateral distance between one or more front mower units and one or more rear mower units is inputted into the controller. In some embodiments, the controller comprises pre-programmed information of the minimum and maximum lateral distance between one or more front mower units and one or more rear mower units. By lateral distance the skilled person would know that this is the distance between the working or mowing widths of the mowing unit and the chassis or longitudinal axis, and that it need not necessary be to the actual lateral end.

In some embodiments, the maximum and minimum lateral distance between one or more rear mower units are inputted into the controller. In some embodiments, the controller is pre-programmed with information of maximum and minimum lateral distance between one or more rear mower units. By lateral distance the skilled person would know that this is the distance between the working or mowing widths of the mowing unit and the chassis or longitudinal axis, and that it need not necessary be to the actual lateral end.

In some embodiments, the working width of, each one or more front mower units and each of one or more rear mower units, is inputted into the controller. In some embodiments, the controller is pre-programmed with information of fixed working width of one or more, or all, mower units. By lateral distance the skilled person would know that this is the distance between the working or mowing widths of the mowing unit and the chassis or longitudinal axis, and that it need not necessary be to the actual lateral end.

In some embodiments the orientation of the mowing units to the tractor are inputted into the controller. In some embodiments, the controller is pre-programmed with information of the orientation of the mowing units in respect to each other. In some embodiments, the controller is pre-programmed with information of the orientation of the mowing units in respect to each other, and the chassis, or driving unit, or driving direction longitudinal axis.

In some embodiments, the controller comprises pre-programmed information of the driving direction of the mowing units. In some embodiments, the driving direction of the mowing units is inputted into the controller. In some embodiments, the controller is configured to be able to determine the driving direction of gang mower assembly from the yaw rate.

In some embodiments, the controller comprises pre-programmed information of maximum lateral movement and lateral direction of one or more, or all, mowing units of a gang mower assembly. In some embodiments, the maximum lateral movement, and lateral direction, relating to the lateral movement is inputted into the controller.

For example, in some embodiments, the controller comprises pre-programmed information inputted of lateral or transverse/sideways distance of one or more mower units and the controller is configured to use, the laterally or transverse/sideways distance together with the direction, in relation to the longitudinal axis, to determine a responsive movement of one or more mower units.

The controller, in some embodiments, may be able to use additional inputted information to help determine and actuate compensating lateral movement of one or more front and or rear mower units to optimise avoiding or reducing leaving unmown areas during a manoeuvre of a gang mower assembly. This may enable fine-tuning of the responsive movement of one or more mower units to may be achieve better accuracy to avoid leaving unmown areas, or less overlap, or less unmown crop being flattened by the wheels of mower units, or any combination thereof.

In some embodiments, the gang mower assembly comprises position sensors, configured to enable the controller to determine the position of one or more, or all, mower units relative to each other, or relative to the driving unit, or relative to both the driving unit and each other mowing unit.

For example in some embodiments a front mowing unit of a gang mower assembly, is always initially at least positioned in the centreline, or longitudinal axis, of the driving unit or tractor. For example, in some embodiments, a front mower unit is initially at least positioned in the centreline, or longitudinal axis of the driving unit or tractor.

In some embodiments, one or more mower units comprise orientation sensors configured to inform the controller of the position of the said mower unit. Advantageously the positon of the individual mower unit, for example the rear units, can be measured as required and the said position measurement used in determine the lateral movement as required based on input from position sensors.

In some embodiments with front mowing unit and rear mowing units the user inputs into the controller, the distances between the mowing units and the rear of the driving unit. In some embodiments, the user inputs the distance between the rear mower unit's cutter bars and the driving unit's axle.

In some embodiments, the controller is configured to be able to use the center point, a point central along the longitudinal axis of a gang mower assembly, with the measured yaw rate, in order to determine a path of a manoeuvre of a gang mower assembly.

In some embodiments the first sensor is configured to be positioned along the longitudinal axis of a gang mower assembly on the rear headstock of the chassis of the driving unit. In some embodiments the first sensor is configured to be positioned along the axis of the longitudinal axis of a gang mower assembly on the chassis of the driving unit. In some embodiments the first sensor is configured to be positioned along the longitudinal axis of a gang mower assembly in line with the axis of the cutting bars of the rear mower unit or units.

Alternatively in some embodiments, the controller is configured to use the yaw rate and to use the location of the first sensor relative to a gang mower assembly that the first sensor is positioned on, to determine a path of a manoeuvre of a gang mower assembly.

In some embodiments, the Inertia Measurement Unit IMU sensor is positioned at or near to the centre point of the gang mower assembly.

The Inertia Measurement Unit (IMU) sensor may sense the turning rate/change in direction of movement over time, relative to the gravity axis (pointing straight to the centre of the earth). The Inertia Measurement Unit (IMU) sensor may detect the yaw rate from which the turning angle about the vertical axis, among other things can be determined.

In some embodiments, the yaw rate measured from the first sensor or from an Inertia Measurement Unit (IMU) sensor is sent to the controller with the units degrees per second, but several other units could be used in other embodiments.

In some embodiments, a second sensor (for example, GPS, radar or transmission sensor) may detect the driving speed (meters per second, kilometres per hour etc...). In some embodiments, the gang mower assembly comprises a second sensor configured to measure the speed of the gang mower assembly. In some embodiments, the controller is configured to be able to read the speed sensor, e.g. speedometer, of a driving unit, for example the tractor, of a gang mower assembly

In some embodiments, the controller is configured, to use the yaw rate detected from a first sensor comprising an Inertia Measurement Unit sensor and to use the speed of the gang mower assembly and to use the Centre Point of the gang mower assembly to determine the path of a manoeuvre of a gang mower assembly.

In some embodiments, the controller is configured to determine and actuate the responsive movement of one or more mower units from the measured path of a manoeuvre of a gang mower assembly. This may be to avoid or minimise unmown areas between one or more front and one or more rear mower units of a gang mower assembly when in use.

In some embodiments, the speed of a responsive movement of one or more mower units is pre-programmed or pre-set with the controller. In some embodiments, the speed of a responsive movement is fixed. In some embodiments, the speed of a responsive movement of one or more mower units is variable. In some embodiments, the controller is configured to vary the speed of a responsive movement of one or more mower units. In some embodiments, the controller is configured to enable a user to vary the speed of a responsive movement of one or more mower units. In some embodiments, the speed of a responsive movement of one or more mower units may be in the range of 0.5 metres per second to 5 metres per second. In some embodiments, the controller is configured to enable a user to preset the speed for a responsive movement of one or more mower units. In some embodiments, the controller is configured to enable a user to preset a range of speeds for a responsive movement of one or more mower units. In some embodiments, the speed of a responsive movement of one mower unit may be a different speed of a responsive movement to that of another mower unit. In some embodiments the speed of a responsive movement for one mower unit may be equal in speed to a responsive movement of another mower unit. In some embodiments, the controller is configured to enable a user to preset a maximum speed for a responsive movement of one or more mower units. In some embodiments, the controller is configured to enable a user to preset a minimum speed for a responsive movement of one or more mower units.

In some embodiments the controller is configured to control the speed of a movement, or responsive movement, of one or more mower units.

In some embodiments the controller is configured to have a default maximum speed of a movement, or responsive movement, of one or more mower units.

In some embodiments, the controller is configured to comprise a default speed or default range of speeds for a responsive movement of one or more mower units.

In some embodiments, the controller is preprogrammed with a variable speed of a responsive movement of one or more mower units. In some embodiments the variable speed of a responsive movement of one or more mower units increases in speed in proportion to the speed of the gang mower assembly. In some embodiments, the variable speed of a responsive movement of one or more mower units increases in speed directly in proportion to the speed of the gang mower assembly. In some embodiments, the controller is preprogrammed with a variable speed of a responsive movement of one or more mower units wherein there is a maximum speed and a minimum speed. In some embodiments, the controller is configured to enable a user to set a minimum or maximum, or a minimum and maximum, variable speed of a responsive movement of one or more mower units. At a minimum speed setting, or too low a speed setting for a responsive movement to one or more mower units there is a risk that the mower unit may not move fast enough to ensure that no unmown areas remain between the mower units. At a maximum speed or at a high speed for a responsive speed of one or more mower units, this may ensure no unmown areas remain between the mower units but risks that there is too much movement, vibrations and wear on the gang mower assembly.

Therefore, preselected settings for the speed of a responsive movement or a preselected range for the speed of a responsive movement may therefore allow fine tuning to avoid unmown areas between mower units, while avoiding significant vibrations and or wear.

In some embodiments the controller is configured to selectively actuate movement of one or more mower units of a gang mower assembly in response to measured or detected information from the sensors. This selective actuated movement may be to any or all, or none, of the mower units, or any combination of the mower units. This selective actuated movement may allow good mowing coverage to not leave any or much unmown areas between the mower units but need not be the most optimum unmown areas option, to have other benefits, for example, reducing excessive movement of the mower units.

In some embodiments the controller is configured to selectively actuate movement of one or more mower units including that the controller may be selective to actuate movement of one or more mower units, if any, or by how much movement. In some embodiments the controller is configured to selectively actuate movement of one or more mower units including that the controller may be selective to actuate movement of one or more mower units, or none, or by how much movement. In some embodiments the controller need not move or actuate movement of one or more mower units. This may allow the controller to be efficient.

In some embodiments the controller is configured to selectively actuate movement of one or more mower units of a gang mower assembly in response to measured or detected information from the first sensor or the second sensor or from both the first sensor and second sensor. In some alternative embodiments the controller is configured to selectively actuate movement of one or more mower units of a gang mower assembly in response to information from other sensors or preprogrammed means in addition to the first and second sensors.

In some embodiments the controller is configured to selectively actuate movement of one or more mower units of a gang mower assembly in response to measured or detected information from the first sensor and second sensor, when the path of the gang mower assembly changes greater than a pre-set threshold. In some embodiments the threshold value before the controller will selectively actuate movement of one or more mower units may be, for example, 5 centimetres, or 7 centimetres, or 12 centimetres or 15 centimetres in lateral movement from a previous position. In some embodiments the threshold value before the controller will selectively actuate movement of one or more mower units may be, for example, 5 centimetres, or 7 centimetres, or 12 centimetres or 15 centimetres in lateral movement from the previous position, for example measured at a pre-set time period.

In some embodiments the controller is configured to take measurements from on or more sensors, for example the first or second sensors or both the first and second sensors, at regular pre-set time periods. The pre-set time period to take measurements, may in some embodiments be every half a second, or 0.1 seconds, or 0.2 seconds, or every second, or 2 seconds, or 3 seconds, or other time period. In this way the controller may plot a path of the movement of the gang mower assembly.

In some embodiments the controller is configured to selectively actuate movement of one or more mower units of a gang mower assembly in response to measured or detected information from the first or second sensors or from both the first sensor and second sensor, when the path of the gang mower assembly changes greater than a pre-set threshold. In some embodiments the threshold value before the controller will selectively actuate movement of one or more mower units may be, for example, 5 degrees, or 7 degrees, or 12 degrees or 15 degrees in change of yaw direction from a previous position. In some embodiments the threshold value before the controller will selectively actuate movement of one or more mower units may be, for example, 5 degrees, or 7 degrees, or 12 degrees or 15 degrees in change of yaw direction from a previous position measured previously, for example at a pre-set time period. In some embodiments the change of direction may be measured on the horizontal plane, the yaw direction or measured with regard to the yaw axis.

In some embodiments the controller is configured to selectively actuate movement, of one or more front mower units, or one or more rear mower units, or one or more front mower units and one or more rear mower units, to avoid or minimise unmown areas between mowing units of a gang mower assembly when the gang mower assembly is making a manoeuvre, in response to the measured information from the first sensor, or second sensor or both the first and second sensors.

In some embodiments the controller is configured to selectively actuate movement of one or more mower units when the path of the gang mower assembly changes greater than a pre-set threshold value.

In some embodiments the controller is configured to selectively actuate movement of one or more mower units when the path of the gang mower assembly changes greater than a pre-set threshold value wherein the pre-set threshold value is, 5 centimetres or 10 centimetres lateral movement. This lateral movement is foreseen to be measured on the horizontal plane.

In some embodiments the controller is configured to selectively actuate movement of one or more mower units when the path of the gang mower assembly changes greater than a pre-set threshold value wherein the preset threshold value is 5 degrees, or 10 degrees, or 20 degrees or 25 degrees, change of yaw direction.

In some embodiments the controller is configured to selectively actuate movement, of one or more front mower units, or one or more rear mower units, or one or more front mower units and one or more rear mower units, to avoid or minimise unmown areas between mowing units of a gang mower assembly when the gang mower assembly is making a manoeuvre, in response to the measured information from the first sensor, or second sensor or both the first and second sensors.

In some particular embodiments the controller is configured to selectively actuate movement, of one or more front mower units, or one or more rear mower units, or one or more front mower units and one or more rear mower units, to avoid or minimise unmown areas between mowing units of a gang mower assembly when the gang mower assembly is making a manoeuvre, in response to the measured information from the first sensor, or second sensor or both the first and second sensors when the path of the gang mower assembly changes greater than a pre-set threshold value.

In some embodiments the pre-set threshold value is, 5 centimetres or 10 centimetres in lateral movement.

In some embodiments the preset threshold value is 5 degrees, or 10 degrees, or 20 degrees or 25 degrees, change of yaw direction.

The advantage of this feature regarding selective actuation is that minor deviations of movement for example from vibrations or bumps in the path of the gang mower assembly, for example when hitting a rock, do not cause excessive movement of the mower units. Instead the present invention may smooth out the movement of the mower units to assist is giving the correct movement to help ensure no unmown areas are left between mower units during a mowing operation but not causes needless or excessive movement of the mower units. This feature helps reduce wear and tear.

In some embodiments the controller is configured to selectively actuate movement of one or more mower units when a sharp turn for example 30 degrees, or great lateral movement, for example 15 centimetres, is made over a shorter time, for example 1 second, than over a longer time, for example 5 seconds. For example in some embodiments, a 5 degree yaw turn over 1 second period may not be greater than the threshold value of a controller to actuate movement of one or more mowers. However, in some embodiments a 30 degree yaw turn, or a 15 centimetre lateral movement, over a 1 second period may be greater than a pre-set threshold value of the controller to actuate a mower unit responsive movement. Or in some alternative embodiments a 5 degree yaw turn over a 5 second period may be greater than the threshold value of a controller to actuate movement of one or more mowers.

In some embodiments, the controller uses computer modelling to determine the movement of one or more mower units in order to avoid or minimise unmown areas between mower units of a gang mower assembly, during a manoeuvre. In some embodiments, the computer modelling may be configured to use the yaw rate and speed of a gang mower assembly to determine the movement of one or more mower units in order to avoid or minimise unmown areas between mower units of a gang mower assembly, during a manoeuvre. In some embodiments, the computer modelling may be configured to use the yaw rate and speed of a gang mower assembly together with additional information to determine the movement of one or more mower units in order to avoid or minimise unmown areas between mower units of a gang mower assembly, during a manoeuvre. In this way, the controller can fine-tune the responsive movement of mower units to more accurately avoid or minimise leaving unmown areas between mower units of a gang mower assembly during a manoeuvre.

According to another aspect of the present invention there is provided a method of operating a gang mower assembly which comprises a steerable wheeled driving unit, and at least front mower unit, and at least one rear mower unit, the said front and rear mower units spaced apart lengthwise of the driving unit, and laterally spaced apart so as to present a combined mowing face and with an overlap setting which is zero or minimal extent during straight line forward mowing, monitoring means which is operative, during a steering manoeuvre, to monitor (1) the yaw rate of a gang mower assembly and (2) the speed of a gang mower assembly, and a controller configured to determine and actuate or indicate the required extent of lateral adjustment of one or more mower units so that one or more rear mower units can follow the path of steering movement of a front mower unit while maintaining substantially a pre-set overlap setting;
the method comprises the steps of steering one or more front mower units along a required curved path from a straight-line position;
monitoring the yaw rate and the speed of a gang mower assembly during a manoeuvre, and indicating, or actuating, the required lateral adjustment for one or more mower units, and operating the control means, in response to the indication so as to effect instantaneous lateral adjustment for one or more of the mower units so that the one or more rear mower units follow the path of one or more front mower units while effectively maintaining a pre-set overlap setting, during the steering manoeuvre and avoiding or substantially without risk of an unmown area being formed, between mower units of a gang mower assembly when in use.

In some embodiments the method comprises the further step of setting a maximum speed of any responsive movement of one or more mower units.

In some embodiments, the lateral adjustment is to one or more front mower units, or one or more of rear mower units, or to one or more front mower units and one or more rear mower units of a gang mower assembly.

In some examples, the first sensor is in electrical communication with the controller. In some examples, the second sensor is in electrical communication with the controller. In some examples, the third sensor is in electrical communication with the controller. This may allow measured values from a sensor to be communicated to the controller.

The invention has been described in relation to a gang mower assembly and to mowing however; the person skilled would understand that the invention could also apply to harvesting of a crop, turning a crop or other activities where a gang assembly is used.

By the term "adjustment" or "movement" or "responsive movement" or the like, when referring to the required movement or position adjustment of one or more mower units, these terms are used interchangeably having the same meaning.

"By the term "back and forth" as used herein to the movement of a mower unit this term used herein includes in meaning the forward and backward direction movement relative to the forward direction of a gang mower assembly.

By the term "centre point" as used herein this is used to mean a central point of a gang mower assembly but also may include in meaning a central point for a radius of a curve that the gang mower assembly may make during a manoeuvre.

By the term "determine" and the like as used herein in relation to determine movement of the one or mower of the mower units this includes if any mower unit should be moved or any combination of one or more mower units, and if any movement by how much movement and if any movement in which direction. The meaning includes that maybe no mower units are moved.

By the term "driver" and "user" as used herein, these terms may be used interchangeably but the user inputting data may not necessarily be the driver of the drive unit, and therefore the terms include more than one driver and or user.

By the term "driving direction longitudinal axis", or "longitudinal axis" or the like terms in relation to the gang mower assembly or parts thereof, these terms are used to mean the longitudinal axis of the gang mower assembly parallel in a direction of travel.

By the term "driving unit" as used herein this term may include a tractor, or robot among other vehicles.

By the term "gang mower assembly" as used herein, this term is used to include a potentially multi-unit mower system, wherein would normally comprise one or more front mower units and one or more, usually two, rear mower units that together make a mowing face to cut a crop, and would be attached to and moved by an agricultural vehicle, for example a tractor. The term also includes a gang mower assembly agricultural vehicle-implement and includes any gang assembly agricultural vehicle-implement system.

By the term "headstock" as used herein this term is known in the art and is also sometimes referred to as carrier stock or carrier frame. It is used to include in meaning an element to which a mower unit may be mounted to, and the headstock may be mounted to the main chassis or frame of the gang mower assembly or driving unit.

The terms "left" and "right", or "left side" or "right side" or "left-hand direction" or "right-hand direction" or "left-hand side" or "right-hand side" and "forward" and "backwards" or the like are terms used herein to help describe the invention but not necessarily limiting and are used to be relative to one facing the direction of travel when in use.

The terms "IMU" and "Inertia Measurement Unit" are also known as Inertia Motion Unit.

By the term "input" or "inputted" and the like, as used to convey parameters and data to the controller, this is used to include in meaning programming parameters and data into the controller.

By the term "instantaneously" as used herein this is used pragmatically and is used to mean that this term includes the meaning of very quickly, or very fast after a trigger event, and is not necessarily limited to mean "at the same time" or "immediately".

By the term "lateral" or "laterally" or the like as used herein this is used to include in meaning lateral movement, both right and left movement as required relative to the driving direction longitudinal axis of a gang mower assembly.

By the term "lengthwise" of the driving unit as used herein this term is used to mean the distance parallel along the longitudinal axis of the driving unit.

The terms "manoeuvring" as used herein is used to describe motion, in particular to the gang mower assembly and includes non-straight movement, and in particular where the driving unit is require to turn around to start another straight line mowing operation.

By the term "minimise" and the like, as used herein this includes in meaning reducing.

By the term "movement" or "responsive movement" and the like in relation to movement of a mower unit actuated by the controller in response to measured or pre-set information these terms are used interchangeably and have the same meaning herein.

By the term "selectively actuate" or the like as used herein this includes in meaning that nothing may be actuated, it includes in meaning that there is an intentional choosing or consideration, if and/ or when something is actuated. This term may include that the or any movement of the mower units for the most optimum reduced unmown area option is not selected.

By the term "vertical movement" or the like in relation to the movement of a mower unit of a gang mower assembly, is used herein to include in meaning both up and down movement as required.

By the term "yaw rate" this is used to mean the angular velocity of rotation about the vertical axis, and includes but not limited to situations that it may be measured from the driving direction axis as a point of reference.

By the term "wheel location" this term as used herein also includes in meaning the plural, the location of more than one wheel when there are more than one wheels.

By the term "wing mower" as used herein this term is used to describe a gang assembly wherein two mower units protrude laterally from either side of a transport unit, or tractor.

Any one or more features of any example, embodiment or aspect of the present invention described herein may be combined with any other one or more features of any other example, embodiment or aspect of the present invention as described herein.

### Example 1

The following is a description of a specific non-limiting example:
In this example, a control system is mounted to a gang mower assembly. In this example, the control system comprises a first sensor configured to measure the yaw rate of a gang mower assembly, to which the first sensor is mounted to. In this example, the controller system also comprises a controller in communication with the first sensor and in communication with a second sensor. In this example, the user will measure or know and input the working width of the front W1 and rear mower units W2 W3. In this example there is one front mower unit and two winged rear mower units, all distanced from each other, configured to provide a continuous cutting face. In this example the user inputs information by selecting a pre-set make of mower for example the pre-set KvG choice or enters specific values manually, for example the width of the front mower unit, and for the rear two mower units.

In this example, the position of cutting units in relation to the tractor is manually measured and inputted in the controller. In this example, this is done by measuring the distance laterally or transverse/sideways to the tractors driving direction, when driving straight forward, in relation to the tractors centre axis, also pointing in the tractors driving direction when driving forward, L1, L2, L3.

In this example, the front unit is always positioned in the centreline of the tractor, but in alternative embodiments, this may be different. In this example, only the rear two mower units are adjusted laterally in response to measurements to avoid or minimise leaving unmown areas between mower units when the gang mower assembly is making a manoeuvre.

In this example the positon of the individual position of the rear units, is also inputted into the controller to use, P1, P2, P2.

In this example the longitudinally length in respect of the tractors driving direction when going straight forward, in relation to the axis going through the tractors rear axle T1 is inputted into the controller, wherein the centre point (CP) of any turning circle is positioned on some front wheel steered tractors. In this example for the front unit and rear units distances a user fills in the distances for the system to calculate the distance between the units cutter bars and the tractors rear axle, are inputted into the controller and are D1, D2, D3.

In this example, the first sensor comprises an Inertia Measurement Unit IMU sensor and measures the yaw rate of the gang mower assembly.

In this example, the Inertia Measurement Unit IMU senses the turning rate/change in direction of movement over time, active to the gravity axis (pointing straight to the centre of the earth).

In this example, the yaw rate of the gang mower assembly is sent to the controller with the units of degrees per second, but in alternative embodiments, different units could be used.

In this example, the controller uses a second sensor, a speedometer, mounted to the gang mower assembly (GPS, radar or transmission sensor) to detect the driving speed (in meters per second, or kilometres per hour etc...) and this value is sent to the controller. In alternative embodiments, the second sensor may comprise GPS, Radar or transmission sensor for example. Alternative embodiments may have different sensors or means to be able to detect the speed of the gang mower assembly.

The controller is configured to use the detected yaw rate and speed to determine and actuate the required lateral motion of one or more front mower unit, or one or more rear mower units, or one or more front mower units and one or more rear mower units of a gang assembly mower. In addition in this example, the controller is configured to use, any or all, of the said manually inputted information to fine tune, to determine, and actuate the required lateral motion of one or more front mower units, or one or more rear mower units, or one or more front mower units and one or more rear mower units, of a gang assembly mower. This may enable the controller system to be even more efficient at avoiding unmown areas between mower units while minimising both, overlap of the mower units and flattening unmown areas.

### Example 2

In order to determine and actuate lateral motion of one or more front mower units, or one or more rear mower units, or one or more front mower units and one or more rear mower units, of a gang mower assembly, a control system as herein described is used, with a gang mower assembly comprising a driving unit, a front mower unit and two rear mower units:
A user may measure and input into the controller the distance between one or more edges of a front mower unit and the central point of a gang mower assembly; and the distance from one or more front edges of a rear mower unit and the central point;
A user may measure and input into the controller the lateral distance from the driving direction longitudinal axis to outer lateral edges of a front mower unit, and the lateral distance from the driving direction longitudinal axis to the outer lateral edges of (in this example) two rear mower units; this therefore also gives the cutting widths of the front and any rear mower units;
A first sensor comprises an inertia measurement unit (IMU) sensor positioned above the central point along the drive direction axis, the first sensor is configured to indicate the yaw rate about a vertical axis of the gang mower assembly, and the first sensor is in electrical communication with the controller;
Using the yaw rate indicated from the first sensor / inertia measurement unit (IMU) and the speed from the driving unit's (for example tractor's) speedometer, or second sensor to measure speed, the controller can determine a path of the gang mower assembly during a manoeuvre; the controller us also configured from using the calculated path of the gang mower assembly to determine and actuate, almost instantaneously, the required lateral motion of one or more of the mower units, of a gang mower assembly to avoid or minimise unmown areas between the mower units remaining after a manoeuvre.

The description, embodiments, examples and related figures herein describing the present invention are intended to illustrate various possible and alternative embodiments of the present invention. The present invention is not confined to specific embodiments and examples as herein described but includes a plurality of variations or alternative embodiments that are feasible within the scope of the claims.

Particular examples and embodiments, of the gang mower assembly will be described in detail by way of example only, with reference to the accompanying drawings:
Figure 1 is a diagrammatic plan view of a prior art without overlap control between a front mower and rear mower units, to illustrate how this would give rise to unmown areas during a steering manoeuvre; and,
Figure 2 is a plan view illustration of an embodiment of the present invention mounted on a gang mower unit.

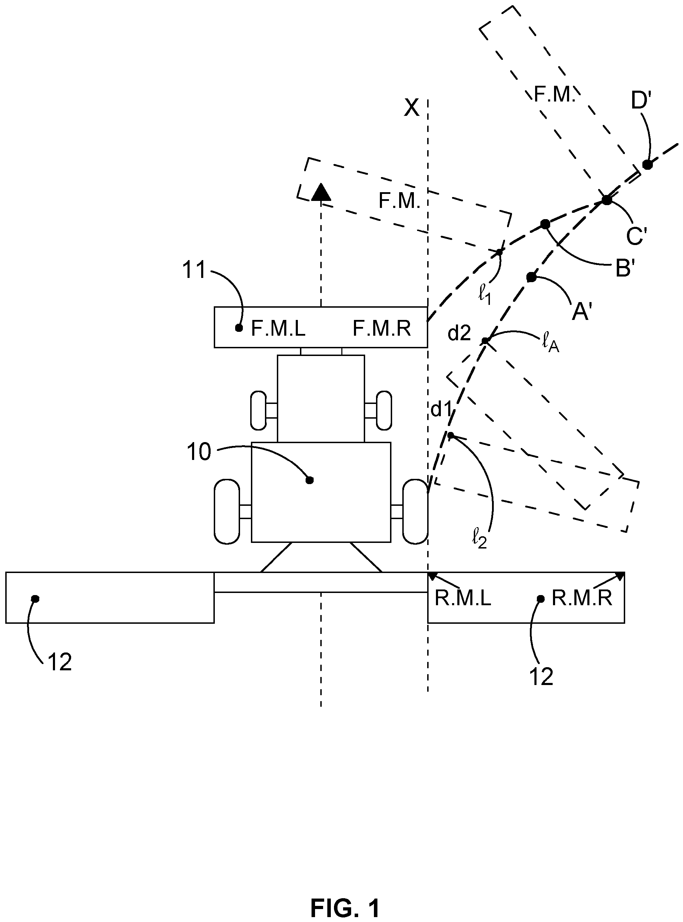

Referring to Figure 1 of the drawings this will be described to set out the background to the present invention and shows how unmown areas can be formed with existing gang mower assemblies, if no, or inefficient, lateral overlap is provided between the inboard end of the rear mower and the corresponding end of the front mower unit. Figure 1 shows a driving unit 10 and a front mower unit 11 mounted on the chassis of the driving unit 10 at the forward end thereof. A pair of rear wing mower units 12 is provided, and it will be noted that the rear mower units 12 do not have any lateral overlap relative to the front mower unit 11. Assuming the gang mower assembly is going to steer to the right, the relative paths of travel of the front mower unit 11 and the right hand one of the rear mower units 12 will be described. Thus, the inboard or left-hand side of rear mower unit 12, designated RML, is substantially in line with the right-hand end of the front mower unit 11, designated FMR. During a typical steering manoeuvre, which is to the right as illustrated, the end FMR follows a steered path B', whereas end RML of the rear mower unit 12 follows path A' (in the absence of any compensating adjustment).

Clearly with the arrangement shown in Figure 1, there will be substantial unmown areas, during a steering manoeuvre, and which is represented by the area defined between paths A' and B'. It is for this reason therefore that in existing arrangements. It is usual to provide substantial lateral overlap between end FMR and end RML, and which typically is 30 to 40 centimetres during straight line mowing in the direction of arrow X.

It is the purpose of the invention to provide compensating lateral adjustment of one or more front mower units, or one or more rear mower units, or one or more front mower unit and one or more rear mower units 12, of a gang mower assembly, during a steering manoeuvre, whereby one or more of the mower units 12 11 undergoes lateral adjustment movement by a sufficient amount so the unmown areas between one or more front mower units 11 and one or more rear mower units 12 is avoided or minimised. For example, this may be that the end RML substantially follows the path of end FMR of the front mower unit during a steering manoeuvre.

In this present invention the control system and or controller may determine and actuate movement (for example laterally from the longitudinal axis) of one or more of the mower units of a gang mower assembly.

In the absence of the invention, after end FMR has followed a path of travel of length 11, along steered path B', end RML will have moved along path A' through a distance of I2. There will then be a lateral deviation of rear mower unit 12 by distance d1, and which represents the beginning of the creation of unmown area.

The figure 1 also shows the movement of end FVR along length l3 of steering path B', and wen end RML will then have travelled distance I4 along unadjusted path A', in which case there will be a lateral deviation of d2. Finally, by the time the path A' and B' intersect, at point C', this represents the end transitional phase between straight line mowing in a direction X, and the end of a steering manoeuvre. This is followed by movement along a straight path D'.

For completeness the front mower unit FM and left side of front mower unit F.M.L is shown. A person skilled in the art would understand the principles on the side illustrated would work on the other side too.

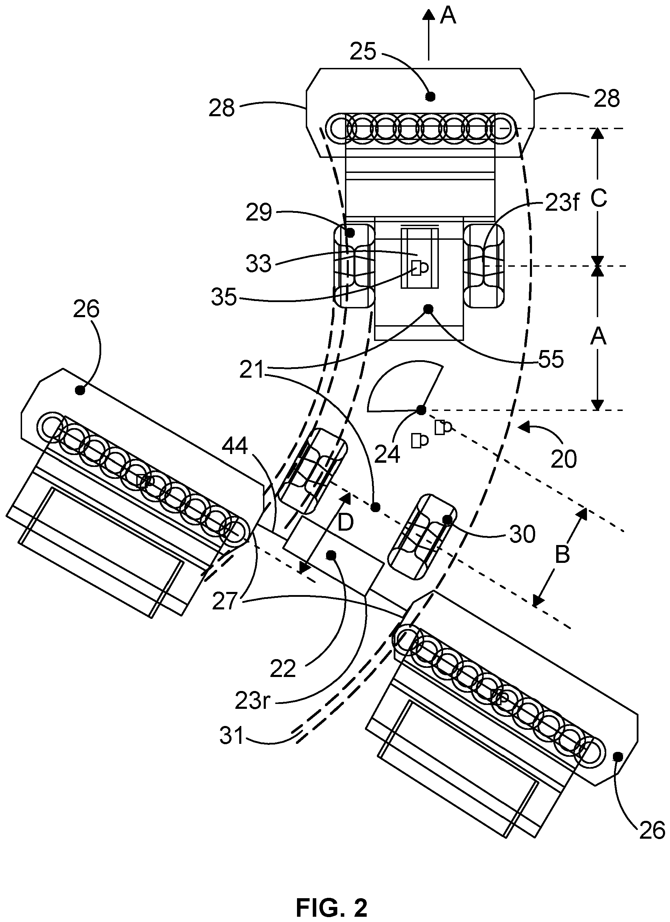

Referring now to figure 2, an embodiment of the present invention will be described, wherein a control system 33 comprising a controller 35 and a first sensor 22 comprising an Inertia Measurement Unit 22 is used. The controller 35 is electrically connected to the first sensor / Inertia Measurement Unit, such that the controller can receive and monitor a yaw rate of a gang mower assembly (shown generally as 20) as detected by the Inertia Measurement Unit (IMU) sensor 22, that the first sensor and controller and control system are mounted to. Ideally, the first sensor / the Inertia Measurement Unit (IMU) 22 is positioned at the central axis of the headstock 23r of the rear mounted mower units 26 as shown by 22 of the gang mower assembly 22 along the driving direction longitudinal axis as shown by arrow A. The control system 33 is located in a tractor 21 of a gang mower assembly 20 and is also electrically connected to the speedometer of the tractor 21 such that it may receive speed information of the gang mower assembly 20 and is also electrically connected to the hydraulic systems for lateral movement of a front mower unit, 25 and the two rear mower units 26, of a gang assembly mower 20, such that the controller 35 acting on the information of the yaw rate of the gang mower assembly 20 and the speed from the speedometer from the driving unit 21, is configured to determine and actuate the lateral motion or movement of a front mower unit 25, or one or more rear mower units 26, or a front mower unit 25 and one or more rear mower units 26, of a gang mower assembly 20. The controller 35 is configured that it may continuously register information from the tractor 21 and or gang mower assembly 20 on its yaw rate and speed. In this example optionally there is also detection sensors 29, and 30 located around wheels of the tractor on either side of the tractor 21, that are able to detect and measure the width and location of the front 25 and rear 26 mower units, and the mower units distance from the chassis or driving direction longitudinal axis (along Arrow A) and from each other. In other embodiments, this additional information could be loaded into the controller 35 manually or would be known from pre-set, pre-programmed, values depending on the machinery used. On the basis of the yaw rate and speed of the gang mower assembly the controller may be able to determine a path of a manoeuvre of a gang mower assembly, and the controller is configured to determine and actuate responsive adjustment or movement of one or more of the mower units to avoid or minimise the amount of unmown areas remaining between mower units during a manoeuvre of the gang mower assembly. On the basis of the additional inputted or obtained information, for example on the positions of the front 25 and the rear mower units of 26 a gang mower assembly 20, the controller 21 may determine and actuate lateral movement of one or more of the rear mower units 26, or the front mower unit 25, or of both the front mower unit 25 and one or more rear mower units 26, of a gang mower assembly 20 to maybe optimise the overlap of the working area of a front mower unit 25 and one or more rear mower units 26 of a gang mower assembly 20, to avoid unmown areas or reduce unmown areas without excessive overlap, or flattening unmown crop.

The gang mower assembly 20 comprises, in this example but not necessary for other examples, a steerable wheeled driving unit 21, for example a tractor, 21. In this example but not necessary in other embodiments, the tractor 21 has a front chassis part 23f or headstock and a rear chassis part or headstock 23r which are coupled together by a pivot part. In other examples the first sensor 22 may be positioned at the central point 55 of the gang mower assembly. The vertical steering pivot axis is shown at 24. In this example, a front mower unit 25 is mounted on the forward end of the front chassis part 23f, and a pair of rear wing mower units 26 are provided, connected one on each side of the rear end of the rear chassis part 23r. The front mower unit 25, and each of the rear mower units 26 are spaced apart lengthwise of the driving unit 21, and are laterally spaced apart so as to present a combined mowing face to a standing crop, and with an overlap setting between the inboard end 27 of each mower unit 26 and the corresponding outer end 27 of each rear mower unit 26 and the corresponding outer end 28 of the front mower unit 25 which is zero or of a minimal extent during straight line forward mowing. Optionally to this embodiment but not necessarily in other embodiments, the front chassis part is supported by a front wheel set having a fixed axle, and the rear chassis part 23r is supported by rear wheel set, which also has a fixed axle. In this example but not necessary in other embodiments of the invention, steering of the vehicle 21 is obtained by operation of the pivot steering mechanism which pivots the front and rear chassis parts 22, 23 so that a steering manoeuvre can take place.

The working width or cutting width of the front mower unit 25 of a gang mower assembly 20 used in this example can also be inputted into the controller. The lateral distance of the front mower unit 25 of the gang mower assembly 20 used, can also be inputted into the controller such that the controller knows the lateral distance of both lateral edges of the front mower unit 25 from the driving direction longitudinal axis (along arrow A) and thus the cutting width or front mower 25 width is also known.

The working width or cutting width of the one or more rear mower units 26 of a gang mower assembly 20 used in this example can be inputted into the controller. The lateral distance of the one or more rear mower units 26 of the gang mower assembly used, when obtained by the controller such that the controller knows the lateral distance of both lateral edges of the front mower unit 25 from the driving direction longitudinal axis (along arrow A) and thus the cutting width or front mower width is also known.

The distance from the front mower unit 25 to the one or more rear mower units 26, along the driving direction longitudinal axis (along arrow A), can also be inputted into the controller. For completeness the distance between the axle of the front mower cutters and the axle of the front wheels is shown as C. The distance between the axle of the front wheels and axle of the back wheels is shown as A and B, The distance between the axle of the back wheels and the rear cutting bar of the rear mower units 26, is shown as D.

Figure 2 shows cut out view for simplicity, a gang mower assembly 20 moving along a curved path, in the arrow A direction, of fixed radius, during a steering manoeuvre. In other embodiments a manoeuvre of a gang mower assembly may, for example, have a different steady radius or a non-steady radius or a changing radius giving an irregular curve.

In the present example of figure 2 there is very small i.e. minimal lateral overlap between the front mower unit 25 and each of the rear mower units 26, as shown by reference 31. This is a stable situation during movement along a curved steering path and means that no unmown areas are remaining following the manoeuvre of the gang mower assembly (20).

However, in the transition from the straight line mowing to steering movement along a curve, there is a requirement to effect lateral movement of at least one of the mower units 25, 26, to ensure that no, or minimal, unmown areas are produced. The user would input measurements of the width of the mower units and distance from each other and from the driving direction longitudinal axis as detailed above, into the controller, or these can be deduced from inputting the make and model of the equipment inputted or deduced from sensors 29, 30 (depending on the embodiment of the invention). Means are provided so that the speed of the tractor indicating the speed of the mowing units is sent automatically to the controller of the gang mower assembly 20, and with the measurements of the yaw rate indicated from the first sensor and communicated to the controller. In this example the first sensor comprising an inertia Mobile Unit IMU sensor 22. The controller is able to move the appropriate mower unit or units 25, 26 in the required direction and lateral distance to prevent unmown areas remaining between the mower units as the gang mower assembly 20 passes by, even during a manoeuvre, such as a tight turn. Such that there is no unmown areas, or minimal areas, remaining between the paths of the front and rear mower units 25, 26 of the gang mower assembly 20.

## Claims

1. A control system for controlling operation of movement of, one or more front mower units, or one or more rear mower units, or one or more front mower units and one or more rear mower units, of a gang mower assembly, the control system comprising:
- a first sensor for determining the yaw rate of a gang mower assembly;
- a second sensor, or means, for determining the speed of a gang mower assembly; and,
- a controller configured to receive data from the first sensor indicative of the yaw rate of a gang mower assembly, and the controller is configured to receive data from the second sensor, or means, indicative of the speed of the gang mower assembly, and in response to the received said data, the controller is configured to determine and actuate movement, of one or more front mower units, or one or more rear mower units, or one or more front mower units and one or more rear mower units, to avoid or minimise unmown areas between mowing units of a gang mower assembly when the gang mower assembly is making a manoeuvre.

2. A control system as claimed in claim 1 wherein the first sensor comprises an Inertia Measurement Unit sensor.

3. A control system as claimed in claim 1 or 2 wherein the controller determines a path of a manoeuvre of a gang mower assembly to determine the responsive movement of, one or more front mower units, or one or more rear mower units, or one or more front mower units and one or more rear mower units, of a gang mower assembly, to avoid or minimise unmown areas between the mowing units of a gang mower assembly when making a manoeuvre.

4. A control system as claimed in claim 1 or 2 or 3 wherein the controller actuates lateral movement relative to the longitudinal driving direction axis, of one or more front mower unit, or one or more rear mower units, or one or more front mower units and one or more rear mower units, of a gang mower assembly.

5. A control system as claimed in any one of claims 1 to 4 wherein the controller is configured to activate hydraulic systems, or electrical motors, or pneumatic motors, or any combination of, hydraulic systems, electrical motors or pneumatic motors, to actuate the movement of one or more front mower unit, or one or more rear mower units, or one or more front mower units and one or more rear mower unit, of a gang mower assembly.

6. A control system as claimed in claim 5 wherein the controller is configured to activate hydraulic side shift valves of hydraulic side shift cylinders for the movement of one or more mower units, to actuate the lateral movement, of one or more front mower unit, or one or more rear mower units, or one front mower units and one or more rear mower units of a gang mower assembly.

7. A control system as claimed in any preceding claim where the controller is configured, to use the yaw rate detected from the first sensor and, to use the speed of the gang mower assembly from a second sensor, or means, to determine the speed of a gang mower assembly, and the controller is configured, to use the said speed and said yaw rate, to determine the path of the gang mower assembly, and to determine and actuate, the required responsive movement relative to the driving direction axis, of one or more front mower units, or one or more rear mower units, or one or more front mower units and one or more rear mower units, of a gang mower assembly, to avoid or minimise unmown areas between mower units of a gang mower assembly.

8. A control system as claimed in claim 7 wherein the controller determines the said path of the gang mower assembly and if the said path is predicted to leave unmown areas between the mower units of a gang mower assembly, to actuate a responsive movement of one or more front mower units, or one or more rear mower units, or one or more front mower units and one or more rear mower units, of a gang mower assembly to avoid or minimise unmown areas between mower units of a gang mower assembly.

9. A control system as claimed in any preceding claim where the controller is configured, to use the yaw rate detected from the first sensor, and configured to use the speed of the gang mower assembly, and is configured to use the Centre Point of the gang mower assembly, to determine the path of the gang mower assembly and then the controller is configured to determine and actuate, the required lateral motion of one or more front mower unit, or one or more rear mower units, or one or more front mower units and one or more rear mower units, of a gang mower assembly to avoid or minimise unmown areas between mower units of a gang mower assembly.

10. A control system as claimed in any preceding claim wherein comprises a third sensor that is configured to detect the location and orientation and width of mower units of a gang mower assembly when operable with a gang mower assembly and wherein the said third sensor is configured to convey detected information to the controller.

11. A control system as claimed in any preceding claim wherein the first sensor is positioned along the driving direction longitudinal axis.

12. A control system as claimed in any previous claim wherein the controller is configured to selectively actuate movement, of one or more front mower units, or one or more rear mower units, or one or more front mower units and one or more rear mower units, to avoid or minimise unmown areas between mowing units of a gang mower assembly when the gang mower assembly is making a manoeuvre, in response to the measured information from the first sensor, or second sensor or both the first and second sensors.

13. A control system as claimed in claim 12 wherein the controller is configured to selectively actuate movement, of one or more front mower units, or one or more rear mower units, or one or more front mower units and one or more rear mower units, to avoid or minimise unmown areas between mowing units of a gang mower assembly when the gang mower assembly is making a manoeuvre, in response to the measured information from the first sensor, or second sensor or both the first and second sensors when the path of the gang mower assembly changes greater than a pre-set threshold value.

14. A gang mower assembly comprising a control system as claimed in any one of the preceding claims.

15. A method for avoiding or reducing unmown areas of a crop between front and rear mower units of a gang mower comprising the steps of:
- using, a control system as claim in any one claims 1 to 13 or gang mower assembly as claimed in claim 14.
